Europäisches Patentamt

European Patent Office

Office européen des brevets

(19)

(11) Publication number: **0 111 574 B1**

## (12) EUROPEAN PATENT SPECIFICATION

(45) Date of publication of patent specification: **11.09.91**

(21) Application number: **82111596.1**

(22) Date of filing: **14.12.82**

(51) Int. Cl.5: **F02B 47/10**, F02B 43/10, F02M 21/02, F02M 25/06, F23L 7/00, F23C 9/00

(54) Combustion system for mechanical drive systems using gaseous hydrogen as fuel.

(43) Date of publication of application:
**27.06.84 Bulletin 84/26**

(45) Publication of the grant of the patent:
**11.09.91 Bulletin 91/37**

(84) Designated Contracting States:
**AT BE CH DE FR GB IT LI LU NL SE**

(56) References cited:
| | |
|---|---|
| DE-A- 2 641 228 | FR-A- 721 354 |
| FR-A- 1 178 241 | FR-A- 2 096 416 |
| FR-A- 2 383 247 | GB-A- 1 517 799 |
| GB-A- 2 079 441 | US-A- 3 648 668 |
| US-A- 3 971 847 | US-A- 3 982 878 |
| US-A- 4 059 076 | US-A- 4 111 160 |

(73) Proprietor: **Meyer, Stanley A.**
**3792 Broadway**
**Grove City Ohio 43123(US)**

(72) Inventor: **Meyer, Stanley A.**
**3792 Broadway**
**Grove City Ohio 43123(US)**

(74) Representative: **Wasmeier, Alfons, Dipl.-Ing. et al**
**Postfach 382 Greflingerstrasse 7**
**W-8400 Regensburg(DE)**

## Description

This invention refers to a combustion system according to the introductory part of claim 1.

The hydrogen-oxygen generation according to this system is a demand system, in which the hydrogen/oxygen is generated only upon the need. The generation is controlled in quantity by the need, such as an accelerator for an automotive device.

From FR-A-1 178 241 a process for operating a combustion system for mechanical drive systems using gaseous fuel is known, which comprises a hydrogen/oxygen generator, a water reservoir for retaining water therein, a pair of similar electrode plates positioned in said water reservoir, a direct current voltage source connected to said plates to supply an electrical voltage/low current thereto and to dissociate the hydrogen gas atoms and oxygen gas atoms from said water molecules, a gas mixing chamber, air intake means for combining air with the mixture of hydrogen and oxygen gases, a gas burner having a controlled amount of mixed gases from the mixing chamber fed thereto, means to ignite said gas/air mixture in said burner, and demand controlled means for varying the release of said hydrogen/oxygen gas atoms from said water molecules to thereby accelerate and decelerate the ignition of the gas/air mixture in said burner. The hydrogen generator produces a uniform gas mixture (hydrogen, oxygen and ambient air) by an electrical polarization effect. The gas mixture is introduced to and intermixed with ambient air to produce an extra supply of gases beyond the capacity of the fuel cell. The combustible gas mixture enters into the combustion chamber and by spark ignition acts upon a mechanically displaceable piston. The supply of hydrogen gas determines the engine speed and is directly related to the applied voltage by way of the electrical polarization process. This system uses pure water, which is slightly acid, and metallic electrodes, one each within interconnected chambers; one electrode generates oxygen and the other generates hydrogen from the water supply within a third chamber. Moreover, this system uses the combination of air and oxygen plus hydrogen mixed within the gas mixing chamber and delivered to the gas burner.

FR-A-2 096 416 discloses a gas fuel internal combustion engine, which includes a mixing chamber, within which air, hydrogen gas and exhaust gases are mixed and the mixture is fed into the combustion chamber, where it is ignited and where exhaust gases exit through a manifold and pass through a heat exchanger, which heats the hydrogen fuel stored in a tank. Liquid hydrogen within an insulated tank is gasified and hydrogen gas flows into a gas store and from there into a mixing chamber. Part of the exhaust gas from the combustion chamber is passed to the mixing chamber separate from the hydrogen gas and the oxygen gas. In addition, air is supplied into the mixing chamber. The gaseous fuel mixed with air is pumped under relatively high pressure into the engine combustion chamber to achieve a high compression ratio

FR-A-2 382 247 discloses a method and an apparatus for generating oxygen and hydrogen gas in an electrolytical manner; the apparatus comprises at least one pair of electrodes, which partly are emerged into electrolytical water and conduct current, which is a pulsed dc current. The electrical source is a constant current source, and an electrical commutator is provided for operating the switching on and off of the current and thus generates the electrolysis current, which pulsates with the period of the pulses and at controlled intervals. With this method and apparatus exclusively oxygen and hydrogen gases are produced, and a combined gas is made available at the output end of a pipe, a nozzle or the like.

It is an object of this invention to provide a combustion system combined from a source of any type of natural water, hydrogen generator for developping the hydrogen/oxygen gases, and exhaust gases incorporated in a mechanical drive system.

Such combustion system of the present invention is characterised in that

(a) the direct current voltage source is a source of pulsed direct current potential for dissociating the hydrogen and oxygen atoms from said water molecules, and the demand control means varies the pulse rate,

(b) an exhaust gas mixing chamber is connected with the hydrogen/oxygen generator and with an exhaust gas return passage of the gas burner, and the gas mixture of hydrogen and oxygen is mixed therein with exhaust gases to adjust the burn rate of hydrogen,

(c) an exhaust gas cooling chamber functioning as a spark arrester is provided upstream of the exhaust gas mixing chamber,

(d) the exhaust gas mixing chamber is connected via a pipeline with a distribution chamber from which the mixed gases are supplied to a pilot light line and to a main line with a jet nozzle,

(e) the air mixing device comprises a cone at the inlet of a passage leading to a dispersing chamber of the gas burner, the gas ejected from the nozzle and intermixed with intake air is supplied via said cone into said dispersing chamber, which is provided with outlet ports through which the combustible gas mixture is dispersed into the combustion chamber of the gas burner.

The invention now will be described by way of examples with reference to the accompanying drawings:

Figure 1 is a schematic illustration of a part of the present invention showing the hydrogen/oxygen generator, and

Figure 2 is another part of the invention showing the combustion system.

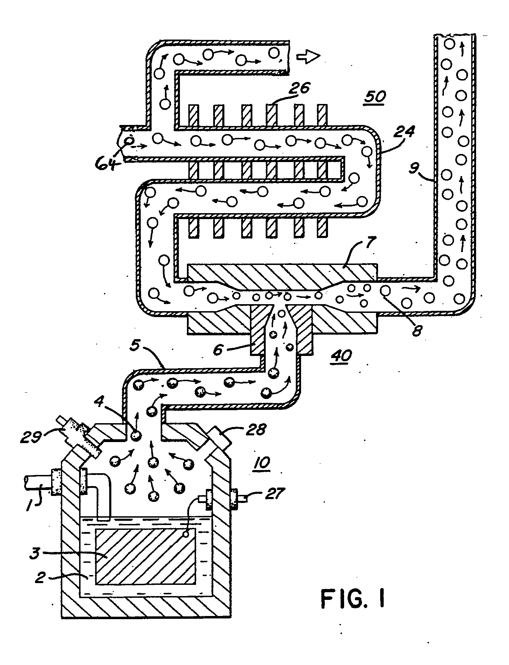

Figure 1 shows the hydrogen source 10 which is a hydrogen/oxygen generator. The water reservoir 2 is filled with natural water. Immersed in the water is an array of plates 3 of similar non-oxidizing material. Applied to plates 3 is a source 27 of pulsed direct current potential via electrical inlet 27. The action of the pulsed direct current, a voltage/current potential, on the plates causes the hydrogen atoms and oxygen atoms to become dissociated from the water molecule. Because the action is not a chemical action any natural water irrespective of source may be utilized.

Varying either the potential of the direct current voltage source or the pulse rate of the pulsing of the direct current potential will vary proportionally the generation of the hydrogen/oxygen. Other factors are disclosed for varying the output of the generator. To replenish the expended water the generator provides a continuous water source 1.

A safety valve 28 is rupturable upon excessive gas build-up. Switch 29 is a gas pressure switch to maintain a predetermined gas pressure level about a regulated low-volume.

The generated hydrogen gas 4 is fed via pipe 5 to a gas mixing chamber 7, wherein the hydrogen gas is intermixed with exhaust gases 22 from a source hereinafter described.

The mixture of hydrogen gas 4 and exhaust gases 22 is fed via pipe line 9 to a carburettor (air-mixture) system. The gas mixture 8 is fed through a nozzle to a chamber in a jet spray. The jet spray of gases combines with the intake air to form a gas mixture of hydrogen gas, which together with oxygen is entered into a combustion chamber.

The exhaust gases 64, the residue of the combustion, now comprise an exhaust mixture 64. These exhaust gases 64 are fed via pipe line 24 to the gas mixing chamber 40. The pipeline 24 passes through cooling chamber 50 for cooling the gases therein. The cooling chamber 50 also functions as a spark arrestor to eliminate the possibility of gas ignition inside the mixing chamber 40. The excess exhaust gases are expelled into the atmosphere.

The gases generated from the water in generator 10 also include the oxygen component of the water in addition to nitrogen. The outlet 5 on the generator 10 receives the oxygen and nitrogen gases generated thereby and feeds the same to the mixing chamber 40. The flow of the hydrogen gas is, of course, critical; therefore, there is incorporated in line 5 a gas flow valve to adjust the hydrogen flow.

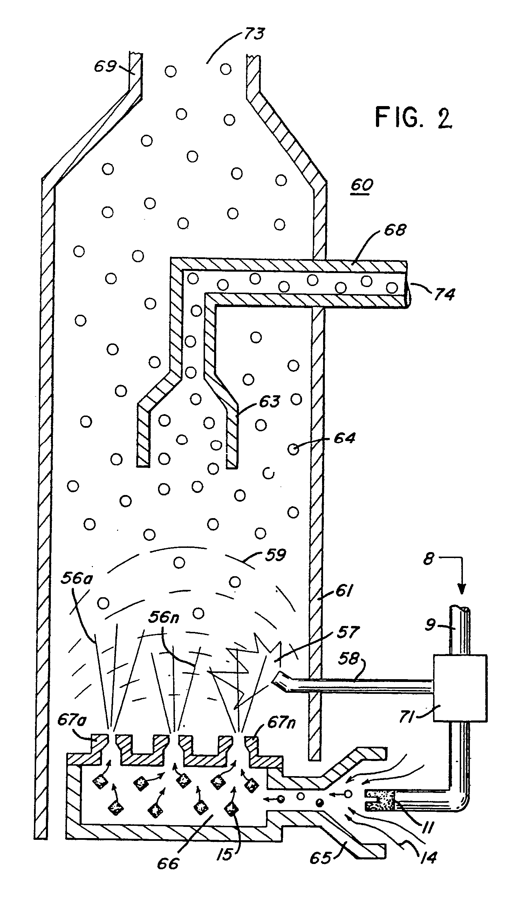

With particular reference to Figure 2 there is illustrated the combustion chamber 60. The gas mixture 8, which is generated and mixed in the arrangement of Figure 1, is directed by pipe line 9 and nozzle 11 to the cone 65. The gas mixture combines with air 14 as it enters cone area 65. The combined gas mixture, atomized by the jet nozzle 11 with air intake 14 is directed by the cone 65 to the dispersing chamber 66. There, the gas mixture 15 is further mixed with air 14 to form combustible gas 15. The gas/air mixture is dispersed via ports 67a xxx 67n from the dispersing chamber 66 into the firing area of the combustion chamber 60. The gas mixture 8 is also fed by pipeline 9 to a separation chamber 71. This chamber sections off a controlled amount of the intake gas mixture to the pilot light line 58. The pilot light firing gas 57 is also sequenced by the separation chamber 71 such as through an associated mechanical drive, much in the same manner as the cylinder of an automobile engine.

The mixed gas 56a, 56n ejected from ports 67a xxx 67n of the dispensing chamber 66 is ignited by the pilot combustion 57 and thereby causes combustion of the mainstream gases. As the exhaust gases 64 rise upwardly in the cylinder 61 of the combustion chamber 60 the cone 63 captures a portion of the exhaust gases 64. The captured exhaust gas is returned via pipe line 68 and outlet 74 to the combustion process as set in Figure 1 or expelled for other purposes. The major portion of the exhaust gases 64 by-pass the cone 63 and rise further to the outlet exhaust 69 and are expelled at opening 73.

As low-voltage direct current is applied to safety valve 28, a solenoid is activated, which applies a control voltage to the hydrogen generator plates 3 via terminal 27 through pressure switch 29. As the electrical power activates the electric solenoid, hydrogen gas is caused to pass through a flow adjustment valve and then outlet pipe 5 for utilization.

A gas regulator valve is utilized to reduce the pressure level inside the hydrogen generator 10. Once hydrogen generator 10 reaches an optimum gas pressure level, pressure switch 29 shuts off electrical power to the hydrogen exciters. If the chamber pressure exceeds a predetermined level, the safety release valve 28 is activated disconnecting the electrical current and thereby shutting down the entire system for safety inspection.

## Claims

1. A combustion system for mechanical drive systems using gaseous hydrogen as fuel, comprising a hydrogen/oxygen generator (10) producing hydrogen and oxygen gases by an electrical polarization process and mixing the hydrogen and oxygen gases to a uniform gas mixture, having a water reservoir (2) filled with natural water, a pair of similar non-oxidizing plates (3) positioned in said water reservoir (2), a direct current voltage source (27) connected to said plates (3) to apply an electrical voltage/low current thereto and dissociate the hydrogen gas atoms and oxygen atoms from said water molecules, an air mixing device which is provided with an air intake, and in which air is mixed with the mixture of hydrogen and oxygen gases, a gas burner (60) which is supplied with a controlled amount of gas/air mixture, and which comprises means (57, 58) to ignite said gas/air mixture in said gas burner (60), and an exhaust gas outlet, the system further comprises demand control means for varying the release of said hydrogen/oxygen gas atoms from said water molecules,
characterised in that

(a) the direct current voltage source (27) is a source of pulsed direct current potential for dissociating the hydrogen and oxygen atoms from said water molecules, and the demand control means varies the pulse rate;

(b) an exhaust gas mixing chamber (7) is connected with the hydrogen/oxygen generator (10) and with an exhaust gas return passage (68) of the gas burner (60), and the gas mixture of hydrogen and oxygen is mixed therein with exhaust gases (64) to adjust the burn rate of hydrogen,

(c) an exhaust gas cooling chamber (50) functioning as a spark arrester is provided upstream of the exhaust gas mixing chamber (7),

(d) the exhaust gas mixing chamber (7) is connected via a pipeline (9) with a distribution chamber (71) from which the mixed gases are supplied to a pilot light line (58) and to a main line with a jet nozzle (11),

(e) the air mixing device comprises a cone (65) at the inlet of a passage leading to a dispersing chamber (66) of the gas burner (60), the gases ejected from the nozzle and intermixed with intake air are supplied via said cone (65) into said dispersing chamber, which is provided with outlet ports (67a - 67n) through which the combustible gas mixture is dispersed into the combustion chamber of the gas burner (60).

**Revendications**

1. Système à combustion pour la propulsion de systèmes mécaniques utilisant l'hydrogène gazeux comme carburant comprenant un générateur d'hydrogène/oxygène (10) produisant de l'hydrogène et de l'oxygène gazeux par un procédé d'électrolyse et mélangeant l'oxygène et l'hydrogène gazeux avec obtention d'un mélange gazeux uniforme, ayant un réservoir d'eau (2) rempli d'eau naturelle, une paire de plaques nonoxydantes similaires (3) disposées dans le réservoir d'eau (2), une source de tension continue (27) connectée aux plaques précitées afin de leur appliquer une tension électrique/bas courant et de dissocier les molécules d'eau précitée en hydrogène et oxygène gazeux, un dispositif de mélange d'air muni d'une admission d'air et dans lequel de l'air est mélangé avec le mélange d'hydrogène et d'oxygène gazeux, un brûleur de gaz (60) qui est alimenté avec une quantité contrôlée de mélange de gaz/air et qui comprend des moyens (57, 58) pour enflammer le mélange de gaz/air précité dans le brûleur de gaz (60) précité, et une sortie de gaz d'échappement, le système comprenant en outre un moyen de contrôle de la demande pour faire varier la libération d'hydrogène/oxygène gazeux à partir des molécules d'eau précitée caractérisé en ce que

a) la source de tension continue (27) est une source de potentiel de courant continu pulsatoire pour dissocier les molécules d'eau précitées en hydrogène et oxygène et le moyen de contrôle de la demande fait varier le taux d'impulsions;

b) une chambre de mélange du gaz d'échappement (7) est reliée au générateur d'hydrogène/oygène (10) et à un passage de retour du gaz d'échappement (68) du brûleur (60) et le mélange gazeux d'hydrogène et d'oxygène y est mélangé avec les gaz d'échappement (64) pour régler la vitesse de combustion de l'hydrogène,

c) une chambre de refroidissement de gaz d'échappement (50) fonctionnant comme dispositif d'arrêt d'étincelles est prévue en amont de la chambre de mélange de gaz d'échappement (7),

d) la chambre de mélange de gaz d'échappement (7) est reliée par l'intermédiaire d'une canalisation (9) à une chambre de distribution (71) à partir de laquelle les gaz mélangés sont amenés à une conduite d'allumage pilote (58) et à une conduite principale avec un gicleur (11),

e) le dispositif de mélange d'air comprend un cône (65) à l'entrée d'un passage amenant à une chambre de dispersion (66) du brûleur de gaz (60), les gaz éjectés du gicleur et mélangés à l'air admis sont amenés par l'intermédiaire du cône (65) précité dans la chambre de dispersion qui est munie d'orifices de sorties (67a - 67n) à travers lesquels le mélange gazeux combustible est dispersé dans la chambre de combustion du brûleur de gaz (60).

## Patentansprüche

1. Verbrennungseinrichtung für mechanische Antriebssysteme unter Verwendung von Wasserstoffgas als Brennstoff, mit einem Wasserstoff/Sauerstoff-Generator (10), der Wasserstoff-und Sauerstoffgase durch einen elektrischen Polarisiervorgang erzeugt und die Wasserstoff- und Sauerstoffgase zu einem gleichförmigen Gasgemisch mischt, mit einem mit natürlichem Wasser gefülltem Behälter (2), einem Paar ähnlicher, nichtoxydierender, im Wasserbehälter (2) angeordneter Platten (3), einer Gleichstromquelle (27), die an die Platten (3) angeschlossen ist und eine elektrische Spannung geringer Stromstärke anlegt sowie die Wasserstoff- und Sauerstoffgas atome aus den Wassermolekülen dissoziiert, eine Luftmischvorrichtung, die einen Lufteinlaß aufweist und in der Luft mit dem Gemisch aus Wasserstoff- und Sauerstoffgasen gemischt wird, einem Gasbrenner (60), der mit einer gesteuerten Menge an Gas/Luft-Gemisch gespeist wird und der eine Vorrichtung (57, 58) zum Zünden des Gas/Luft-Gemisches im Gasbrenner (60) aufweist, sowie einem Abgasauslaß, wobei die Einrichtung ferner eine Bedarfssteuervorrichtung zur Änderung der Freigabe der Wasserstoff/Sauerstoffgasatome aus den Wassermolekülen besitzt, **dadurch gekennzeichnet**, daß

a) die Gleichstromspannungsquelle (27) eine Quelle gepulsten Gleichstrompotentials zum Dissoziieren der Wasserstoff-und Sauerstoffatome aus den Wassermolekülen ist, und die Bedarfssteuervorrichtung die Impulsrate verändert,

b) eine Abgasmischkammer (7) mit dem Wasserstoff/Sauerstoff-Generator (10) und mit einer Abgasrückführleitung (68) des Gasbrenners (60) verbunden ist, und das Gasgemisch aus Wasserstoff und Sauerstoff darin mit Abgasen (64) gemischt wird, um die Brennrate des Wasserstoffes einzustellen,

c) eine Abgaskühlkammer (50), die als Zündfunkensperre wirkt, stromaufwärts in bezug auf die Abgasmischkammer (7) angeordnet ist,

d) die Abgasmischkammer (7) über eine Leitung (9) mit einer Verteilkammer (71) verbunden ist, aus der diegemischten Gase in eine Leitung (58) für die Pilotflamme und in eine Hauptleitung mit einer Strahldüse (11) eingespeist wird,

e) die Luftmischvorrichtung einen Konus (65) am Einlaß eines zu einer Dispersionskammer (66) des Gasbrenners (60) führenden Kanales aufweist, wobei die Gase, die aus der Düse abgegeben und mit Einlaßluft gemischt werden, über den Konus (65) in die Dispersionskammer eingespeist werden, die mit Auslaßöffnungen (67a - 67n) versehen ist, durch die das brennbare Gasgemisch in die Brennkammer des Gasbrenners (60) dispergiert wird.

FIG. I

EP 0 111 574 B1

FIG. 2